# EUROPÄISCHE PATENTSCHRIFT

(11) **EP 2 502 087 B1**
(45) Veröffentlichungstag und Bekanntmachung des Hinweises auf die Patenterteilung: **08.06.2016**
(21) Anmeldenummer: 10779787.0
(22) Anmeldetag: 16.11.2010
(51) Int. Cl.: G01S 3/783

(54) **VORRICHTUNG UND VERFAHREN ZUM LOKALISIEREN VON MODULIERTEN, OPTISCHEN STRAHLUNGSQUELLEN**
DEVICE AND METHOD FOR LOCALIZING MODULATED OPTICAL RADIATION SOURCES
DISPOSITIF ET PROCÉDÉ DE LOCALISATION DE SOURCES DE RAYONNEMENT OPTIQUE MODULÉES

(30) Priorität: 16.11.2009 DE 102009046740
(43) Veröffentlichungstag der Anmeldung: 26.09.2012
(73) Patentinhaber: Opto-MST Sensoren Und Systeme GmbH, 99099 Erfurt (DE)
(72) Erfinder: FREITAG, Hans-Joachim, 99084 Erfurt (DE); ORTLEPP, Hans-Georg, 99192 Apfelstädt (DE); SCHMIDT, Andreas, 99094 Erfurt (DE); BUSCHMANN, Uwe, 99310 Arnstadt (DE)
(74) Vertreter: Patentanwälte Geyer, Fehners & Partner mbB
(86) Internationale Anmeldenummer: PCT/EP2010/067555
(87) Internationale Veröffentlichungsnummer: WO 2011/058190

(56) Entgegenhaltungen:
- EP-A1- 0 310 493
- EP-A1- 0 712 009
- EP-A1- 0 747 719
- EP-A1- 1 357 393
- EP-A2- 1 460 448
- US-A- 5 771 092

## Beschreibung

Die Erfindung bezieht sich auf eine Vorrichtung zum Lokalisieren von modulierten, optischen Strahlungsquellen, die eine Blendeneinrichtung, welche eine Blendenöffnung hat, und eine Detektoreinrichtung umfaßt, die bezogen auf längs einer Haupteinfallsachse einfallender Laserstrahlung hinter der Blendenöffnung liegt. Die Erfindung bezieht sich weiter auf ein Verfahren zum Lokalisieren von modulierten, optischen Strahlungsquellen, bei dem eine solche Vorrichtung verwendet wird.

Sowohl im militärischen als auch im zivilen Bereich werden verstärkt Warnsysteme bzw. Erkennungssysteme zur Detektion von modulierter optischer Strahlung, insbesondere Laserstrahlung, und zur Lokalisierung der Strahlungsquellen eingesetzt. Pulslaserstrahlungsquellen dienen bevorzugt für Zielbeleuchter, Blendlaser oder für die Entfernungsmessung. Die Wellenlänge dieser Strahlung sowohl im zivilen als auch im militärischen Bereich liegt in der Regel im nahen Infrarotbereich, der für das menschliche Auge nicht direkt sichtbar ist.

Aus den Patentschriften DE 3323828 C2 und DE 3525518 C2 sind Vorrichtungen und Verfahren zur Detektion und Lokalisierung von Pulslaserstrahlungsquellen bekannt.

Die EP 0310493 A1, EP 1357393 A1, EP 0712009 A1 und EP 0747719 A1 offenbaren Vorrichtungen gemäß dem Oberbegriff des Anspruchs 1.

Außer der Identifizierung von Laserstrahlungspulsen ist vor allem die Richtungserkennung einfallender, modulierter Laserstrahlung von Bedeutung. Lösungen hierzu sind in der Patentliteratur beschrieben, z. B. in der DE 3525518 C2. Dort werden Glasfasern unterschiedlicher Länge mit sehr schnellen Photoempfängern in sehr aufwendigen Sensoranordnungen eingesetzt. Die damit erreichbare Winkelauflösung im Gradbereich ist für viele Anforderungen aber dennoch nicht ausreichend.

In der US-Patentschrift 5428215 ist ein sogenannter Digital High Angular Resolution Laser Irradiation Detector (HARLID) beschrieben, bei dem zur Richtungserkennung ein mit vielen Einzeldioden versehenes lineares Diodenarray hinter einer Lochmaskenzeile vorgesehen ist. Dieses Prinzip erlaubt nur eine begrenzte Auflösung (Graycode mit 2 hoch 6 Werten) und keine Aussage über die Wellenlänge. Aufgrund der sehr geringen Fläche der Einzeldioden ist die Empfindlichkeit zudem sehr gering. Daneben kann ein HARLID-Sensor die Strahlung nur bezüglich einer Richtungsebene detektieren.

Die Offenlegungsschrift DE 102007024051 A1 beschreibt eine Vorrichtung und ein Verfahren zur Detektion und Lokalisierung von Laserstrahlungsquellen unter Verwendung einer Beugungsoptik vor einer CCD- oder CMOS-Kamera. Dabei werden sehr hohe Anforderungen an den Dynamikbereich der Kameras gestellt und, um eine hohe Winkelauflösung zu erreichen, sind auch hoch auflösende Spezialkameras mit speziellen Kennlinien erforderlich.

Ein großer spektraler Empfindlichkeitsbereich kann beim Ansatz der DE 102007024051 A1 nur mit unterschiedlichen Kamerasystemen abgedeckt werden, die parallel zu betreiben sind. So werden für den Bereich 800 nm bis 1100 nm CMOS Kameras, für den Wellenlängenbereich 1100 nm bis 1700 nm InGaAs-Kameras und für den Wellenlängenbereich 3-5 µm Infrarotkameras mit Platin-Silizid-Detektoren vorgeschlagen. Um größere Spektralbereiche abzudecken, sind diese unterschiedlichen Kamerasysteme jeweils mit gesonderten Optiken zu verwenden. Das treibt nicht nur die Kosten in die Höhe, sondern auch das Gewicht und benötigt einen nicht unerheblichen Bauraum. Außerdem sind CCD- und CMOS-Kameras prinzipiell nicht für die zeitaufgelöste Messung kurzer Laserimpulse geeignet.

Der Erfindung liegt deshalb die Aufgabe zugrunde, eine Vorrichtung und ein Verfahren zum Lokalisieren von modulierten, optischen Strahlungsquellen anzugeben, die bei einfacher Bauweise eine exakte Richtungsangabe über die Lage der Strahlungsquelle liefern. Zudem sollte die Vorrichtung und das Verfahren einfach auf einen breiten Spektralbereich applizierbar sein.

Diese Aufgabe wird gelöst mit einer Vorrichtung zum Lokalisieren von modulierten, optischen Strahlungsquellen gemäß Anspruch 1. Die Vorrichtung umfaßt eine Blendeneinrichtung und eine Detektoreinrichtung, die bezogen auf längs einer Haupteinfallsachse einfallender Strahlung hinter der Blendenöffnung liegt, wobei die Detektoreinrichtung mindestens drei Detektorelemente aufweist, die um ein Zentrum herum angeordnet sind, und die Blendeneinrichtung eine Blendenöffnung aufweist, die mittig über dem Zentrum und längst der Haupteinfallsachse vom Zentrum beabstandet angeordnet ist und alle Detektorelemente in Sicht längs der Haupteinfallsachse nur teilweise überdeckt.

Die Aufgabe wird ebenfalls gelöst mit einem Verfahren zum Erkennen und Lokalisieren von Strahlungsquellen gemäß Anspruch 8. Im Verfahren wird die genannte Vorrichtung in einer Ausführung mit vier Detektorelementen verwendet und ein Wert für einen ersten Winkel einfallender Strahlung gemäß der Gleichung A = (Sa+Sd-Sb-Sc)/(Sa+Sb+Sc+Sd) und ein Wert für einen zweiten Winkel einfallender Strahlung gemäß der Gleichung E = (Sa+Sc-Sb-Sd)/( Sa+Sb+Sc+Sd) berechnet, wobei Sa-Sd die Signale der einzelnen Detektorelemente sind. Der erste Winkel kann der Azimut- der zweite der Elevationswinkel sein.

Erfindungsgemäß werden also mindestens drei Detektorelemente verwendet, die um ein Zentrum herum angeordnet sind. Über dem Zentrum liegt die Blendenöffnung der Blendeneinrichtung, wobei die Blendenöffnung längs der Haupteinfallsachse die Detektorelemente nur teilweise überdeckt. Da zugleich ein Abstand zwischen der Blendenöffnung und dem Detektorelementen besteht, hängt die Fläche, welche die Blendenöffnung über einem Detektorelement frei läßt, vom Winkel der Projektion und damit von der aktuellen Einfallsrichtung der Laserstrahler ab. Je schräger die Strahlung einfällt, desto mehr wird ein gegebenes Detektorelement mit Strahlung beaufschlagt und desto weniger Strahlung erhält das bezogen auf das Zentrum gegenüberliegende Detektorelement. Die Detektorelemente haben vorzugsweise keine Ortsauflösung, da eine solche für das Konzept gar nicht benötigt wird. Ihr strahlungsempfindlicher, nicht ortsauflösender Empfangsbereich wird je nach Richtung eintreffender Strahlung mehr oder weniger von der Blende abgeschattet, wodurch sich ein richtungsabhängiges Signal ergibt.

Sowie diese Beschreibung von Detektorelementen spricht, ist damit die strahlungsempfindliche Fläche eines strahlungsdetektierenden Elementes gemeint. Dies gilt insbesondere für die in dieser Beschreibung zu findenden Lageangaben, die sich jeweils auf die strahlungsempfindliche Fläche beziehen.

Unter Gesichtspunkten der Signalintensität ist es grundsätzlich anzustreben, die zu detektierende Strahlung möglichst wenig zu schwächen. Dies wird üblicherweise dann erreicht, wenn man die Strahlung in Luft führt. Es hat sich jedoch gezeigt, daß das Sensorsignal überraschend linearisiert werden kann, wenn zwischen Blendenöffnung und Detektorelementen ein Material angeordnet wird, das für die Strahlung transparent ist und gegenüber Luft einen höheren Brechungsindex hat. Ein solches Material kann z. B. Glas sein. Das Sensorsignal ist dann sehr viel linearer hinsichtlich der Variation des Einfallswinkels. Somit kann durch eine Maßnahme, die auf den ersten Blick nachteilig erscheint, überraschend ein Vorteil erreicht werden, da eine nachträgliche Signallinearisierung dann entfallen kann oder zumindest einfacher ausfällt.

Die Detektorelemente liegen vorzugsweise im Rahmen der Justiergenauigkeit in einer Ebene. Die Haupteinfallsachse ist dann die Achse, welche auf der Ebene senkrecht steht, und das Zentrum wird definiert durch den Durchstoßpunkt der Haupteinfallsachse durch die Ebene, in welcher die Detektorelemente angeordnet sind.

Es ist aber auch möglich, die Detektorelemente gezielt schräg zu stellen, z.B. in Form eines Tetraedermantels. Die Haupteinfallsachse ist dann diejenige Achse, die mit den Ebenen aller Detektorelemente im Rahmen der Justiergenauigkeit den gleichen Winkel einschließt. Das Zentrum ist dann definiert durch den Durchstoßpunkt der Haupteinfallsachse durch die Ebene, in welche die Zentren aller Detektorelemente aufspannen. Der Effekt einer solchen Schrägstellung jedes Detektorelementes zur Haupteinfallsachse, wobei die Schrägstellung vorzugsweise in einem Winkel von 2° bis 15° gegenüber der Senkrechten zur Haupteinfallsachse liegt, ist es, daß bei gleicher Variation des Einfallswinkels der "effektive Auftreffwinkel" auf die Detektorelemente einen deutlich kleineren Wertebereich überstreicht. Unter "effektiv" wird dabei ein mit dem Signalanteil gewichteter Mittelwert der Auftreffwinkel verstanden. Da Detektorelemente üblicherweise auch eine spektrale Abhängigkeit hinsichtlich ihrer Empfindlichkeit haben, die auch vom Auftreffwinkel abhängt (sogenannte Spektralresponse), hat die Schrägstellung gegenüber einer ebenen Anordnung den Vorteil, daß diese Spektralresponse deutlich weniger winkelabhängig ist. Folglich wird bei großen Einfallswinkeln der Fehler einer Wellenlängsbestimmung, wenn beispielsweise Detektoren verschiedener spektraler Empfindlichkeit verwendet werden, wie nachträglich noch erläutert wird, kleiner. Darüber hinaus zeigen Detektorempfänger eine mit zunehmenden Auftreffwinkeln abnehmende Empfindlichkeit - über den reinen Kosinuseffekt hinaus. Ein solcher Effektivitätsverlust der Detektorelemente wird insbesondere bei großen Auftreffwinkeln durch die Schrägstellung ebenfalls vermindert.

Aus der Vertrimmung, welche die Signale der Detektorelemente gegeneinander zeigen, kann die Richtung der einfallenden Laserstrahlung sehr präzise und mit einer sehr hohen Auflösung ermittelt werden. Im erfindungsgemäßen Verfahren werden dabei die oben erwähnten Winkelgleichungen verwendet, die den Azimutwinkel A und den Elevationswinkel E liefern. Diese Gleichungen addieren die Signale nebeneinanderliegender bzw. gegenüberliegender Detektorelemente und ziehen davon die addierten Signale des verbleibenden Detektorpaares ab. Zur Normierung wird die Gesamtsumme aller Signale herangezogen. Als Signal kann insbesondere die Signalamplitude oder ein daraus abgeleiteter Wert verwendet werden.

Die Anordnung der Detektorelemente um das Zentrum herum ist vorzugsweise auf die Form der Blendenöffnung so abgestimmt, daß für alle Detektorelemente in einer Projektion längs der Haupteinfallsachse die von der Blendenöffnung freigelassenen, also nicht überdeckten Flächenbereiche gleich sind, da dann für Strahlung, welche längs der Haupteinfallsrichtung einfällt, alle Detektorelemente mit der gleichen Strahlungsmenge beaufschlagt werden und somit ein Signal gleicher Amplitude oder gleicher Intensität abgeben.

Die Anordnung der Detektorelemente um das Zentrum herum kann insbesondere kreisförmig sein. Darunter ist zu verstehen, daß die Zentren der einzelnen Detektorelemente auf einer Kreislinie liegen. Damit ist nicht zwingend verbunden, daß die Randbegrenzungen der Detektorelemente tangential zu einem Kreis angeordnet sind. Eine kreisförmige Anordnung im Sinne dieser Beschreibung ist also insbesondere auch die Anordnung von rechteckigen oder quadratischen Sensorelementen in einem dreieckigen, rechteckigen oder quadratischen Muster (Begrenzungskante der Detektorelemente liegen parallel und Zentren der Detektorelemente liegen auf den Ecken eines Dreieckes, Rechteckes oder Quadrates). Bei einer kreisförmigen Anordnung ist es besonders vorteilhaft, die Blendenöffnung symmetrisch auszubilden und anzuordnen.

Die Form der Blendenöffnung kann durchaus anders sein als die Form der Detektorelemente. Insbesondere kann eine fertigungstechnisch einfach herzustellende, runde Blendenöffnung mit rechteckigen oder quadratischen Detektorelementen kombiniert werden. Eine runde Blendenöffnung über quadratischen, um ein Zentrum gruppierten Detektorelementen hat neben der einfacheren Herstellbarkeit noch den überraschenden Vorteil, daß das Sensorsignal hinsichtlich der Winkelangabe eine größere Linearität hat. Bei einer kreisförmigen Blende ist der Linearitätsbereich des Winkelsignals sehr viel größer. Somit entfallen etwaige Linearitätsfehlerkorrekturen oder können einfacher ausgeführt werden.

Das erfindungsgemäße Konzept kann bereits bei ausreichend breitbandigen Detektorelementen mit einem Satz von mindestens drei Detektorelementen und einer diesem Satz zugeordneten Blendenöffnung realisiert werden. Die Richtungsauflösung steigt mit der Zahl an Detektorelementen. Bei vier Detektorelementen können fertigungstechnisch günstige, quadratische Detektorelemente verwendet werden.

Auch können zur Verbesserung der Richtungsauflösung mehrere nebeneinanderliegende Sätze von Detektorelementen gleicher spektraler Empfindlichkeit gegeneinander verdreht werden, wobei der Drehwinkel vorzugsweise geringer ist, als ein auf das Zentrum bezogener Winkelabstand zwischen zwei im Satz benachbarten Detektorelementen. Besonders günstig ist ein Drehwinkel der ein n-tel des Winkelabstands zwischen zwei im Satz benachbarten Detektorelementen beträgt, wobei n die Zahl der in verschiedener Drehlage vorgesehenen Sätze ist.

Zur Auswertung können die Mittelwerte der für jeden Satz getrennt berechneten Winkel E und A ermittelt werden. Alternativ kann der Satz mit dem höchsten Summensignal ausgewählt werden. Es ist auch eine Gewichtung der Winkel E und A mit dem Summensignal des jeweiligen Satzes möglich.

Justieraufwand ist vermieden, da zwei Sätze von jeweils um ein Zentrum herum angeordneten Detektorelementen mit zugehöriger Blendenöffnung in Sicht längs der Haupteinfallsachse verschachtelt werden. Es werden also längs der Haupteinfallsachse der Strahlung eine erste Blendenöffnung, dahinter ein erster Satz von mindestens drei kreisförmig angeordneten Detektorelementen, dahinter eine zweite Blendenöffnung und schließlich ein zweiter Satz von mindestens drei um ein Zentrum herum angeordneten Detektorelementen aufgereiht. In einer Projektion längs der Haupteinfallsachse sind die Blendenöffnungen und die Sätze von Detektorelementen in dem Sinne konzentrisch angeordnet, daß die Zentren auf der Haupteinfallsachse hintereinander liegen. Die erste Blendenöffnung und der erste Satz umgibt dabei in dieser Projektion die zweite Blendenöffnung und den zweiten Satz, d. h. die zweite Blendenöffnung und der zweite Satz liegen in einem frei gelassenen Bereich zwischen dem ersten Satz der Detektorelemente. Verwendet man für die beiden Sätze Detektorelemente unterschiedlicher spektraler Empfindlichkeit, sorgt die längs der dann nur noch einzigen Haupteinfallsachse verschachtelte Anordnung automatisch dafür, daß ein spektraler Fehler bei der Richtungsangabe minimiert ist. Zudem ist ein kompakter Aufbau erzielt, der beispielsweise in ein bekanntes TO-Gehäuse paßt.

Bei dieser verschachtelten Bauweise kann man mehrere (dann Paare von) Sätzen gegeneinander verdreht nebeneinander vorsehen, um die Richtungsauflösung zu steigern.

Eine Aussage über die spektrale Zusammensetzung der detektierten Strahlung erhält man, wenn die Signale der spektral unterschiedlichen Photoempfänger zueinander ins Verhältnis gesetzt werden. Eine besonders große spektrale Bandbreite erreicht man, wenn man für einen der Sätze Silizium-Photoempfänger und für den anderen der Sätze Indium-Gallium-Arsenid-Photoempfänger verwendet. Dann kann vorteilhafterweise auch ausgenutzt werden, daß Indium-Gallium-Arsenid-Photoempfänger bei gleicher Empfindlichkeit kleiner als Silizium-Photoempfänger ausgelegt werden können und somit gut die Lücke zwischen den Silizium-Photoempfängern abdecken können. Der Größenunterschied kann auch bei der erwähnten verschachtelten Bauweise angewendet werden.

Eine besonders gute Winkelauflösung ergibt sich, wenn die Blendenöffnung in einem Abstand zur Ebene der Detektorelemente liegt, die der halben Breite der Detektorelemente mal dem Arkussinus des halben Soll-Winkelmeßbereichs, der erfaßt werden soll, entspricht. Bei der Verwendung von optisch brechendem Flächenaufbau, z. B. zwischen Blendenöffnung und Detektorelementen, ist die Brechungswirkung entsprechend zu berücksichtigen, was durch einen entsprechenden Zuschlag in der Höhe erfolgen kann.

Es versteht sich, daß die vorstehend genannten und die nachstehend noch zu erläuternden Merkmale nicht nur in den angegebenen Kombinationen, sondern soweit technisch möglich auch in anderen Kombinationen oder in Alleinstellung einsetzbar sind, ohne den Rahmen der vorliegenden Erfindung zu verlassen. Auch ist eine Beschreibung der Erfindung in Verbindung mit Laserstrahlung nur exemplarisch und nicht einschränkend zu verstehen.

Nachfolgend wird die Erfindung beispielsweise anhand der beigefügten Zeichnungen, die auch erfindungswesentliche Merkmale offenbaren, noch näher erläutert. Es zeigen:
Fig. 1 schematisch eine Draufsicht auf einen Laserstrahldetektor 1 in einer Bauweise, die nicht die Erfindung realisiert,
Fig. 2 eine Schnittdarstellung entlang der Linie A-A der Figur 1,
Fig. 3 eine erfindungsgemäße erste Ausführungsform eines Laserstrahldetektors,
Fig. 4 eine Schnittdarstellung entlang der Linie B-B der Figur 3,
Fig. 5 eine Draufsicht auf einen Laserstrahldetektor 1 in einer zweiten Ausführungsform,
Fig. 6 und 7 Schnittdarstellungen ähnlich der Figur 2 für eine erste bzw. zweite Abwandlung der Ausführungsformen,
Fig. 8 eine Draufsicht ähnlich der Fig. 1 für eine dritte Abwandlung,
Fig. 9 ein Diagramm betreffend die erste Abwandlung und
Fig. 10 ein Diagramm betreffend die dritte Abwandlung.

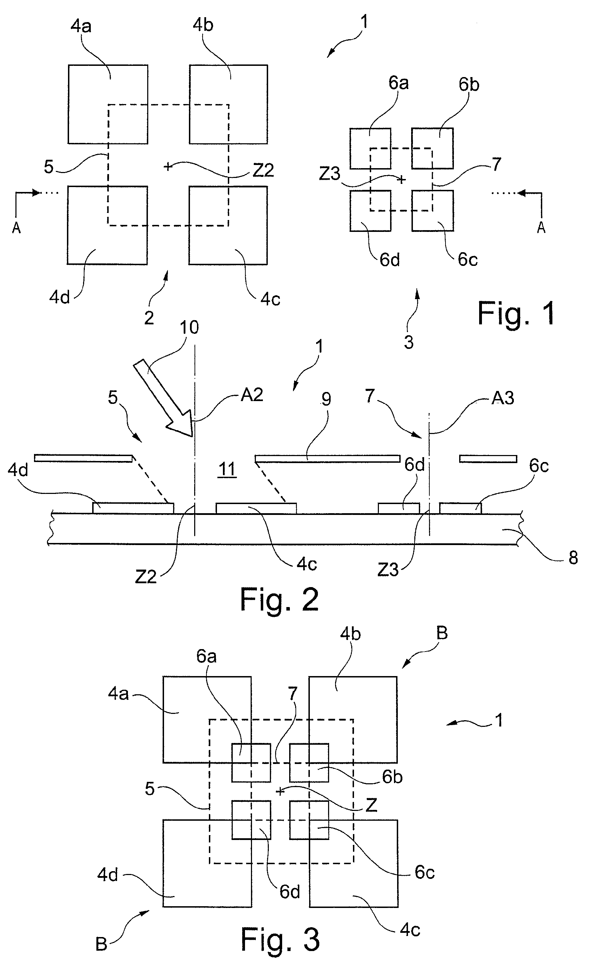

Figur 1 zeigt schematisch eine Draufsicht auf einen Laserstrahlungsdetektor 1. Dieser umfaßt in einer Bauweise zwei Detektorgruppen 2 und 3, nämlich eine Silizium-Detektorgruppe 2 und eine Indium-Gallium-Arsenid-(InGaAs)-Detektorgruppe. Jede Detektorgruppe umfaßt vier einzelne Detektoren, wobei sowohl die Zahl der Detektoren, als auch deren geometrische Ausbildung rein exemplarisch ist. Die Silizium-Detektorgruppe 2 weist im Ausführungsbeispiel vier Silizium-Photoempfänger 4a-d auf, die um ein Zentrum Z2 herum kreisförmig angeordnet sind. In einer gleichen Anordnung um ein Zentrum Z3 liegen die vier InGaAs-Photoempfänger der InGaAs-Detektorgruppe 3. Jede Detektorgruppe stellt eine Detektoreinrichtung dar, deren Detektorelemente die Detektoren sind.

Diese Kombination ist für eine Wellenlängenanalyse vorteilhaft, aber nicht per se zwingend. Es kann auch nur mit einer Detektorgruppe gearbeitet werden.

Über der Silizium-Detektorgruppe 2 befindet sich eine Blende, die eine Blendenöffnung 5 hat, welche in Figur 1 durch eine gestrichelte Linie schematisch verdeutlicht ist. Die Blendenöffnung 5 liegt mittig über dem Zentrum Z2 und läßt in senkrechter Draufsicht, wie sie die Figur 1 zeigt, nur einen Teil jedes darunter liegenden Silizium-Photoempfängers 4a-d frei.

Auf gleiche Weise befindet sich auch über der InGaAs-Detektorgruppe 3 eine Blende mit einer Blendenöffnung 7, die zentral zum Zentrum Z3 angeordnet ist.

Die Lage der Blendenöffnungen 5, 7 zu den Photoempfängern ist in Figur 2 gut zu erkennen, die eine Schnittdarstellung durch die Linie A-A der Figur 1 zeigt. Da in allen Figuren sich strukturell oder funktionell entsprechende Bauteile mit denselben Bezugszeichen versehen sind, kann auf eine Wiederholung der entsprechenden Beschreibung verzichtet werden.

Die Blendenöffnungen 5, 7 sind in rechteckig, wobei die Ecken über den Zentren der darunterliegenden Photoempfänger 4a-d, 6a-d angeordnet sind. Natürlich sind auch anders geformte und/oder angeordnete Blendenöffnungen 5, 7 möglich. Wie vorstehend bereits erläutert, hat eine runde Blendenöffnung über vier quadratischen Photoempfängern überraschend Vorteile hinsichtlich der Signallinearität.

In Figur 2 ist zusätzlich noch für jede Detektorgruppe eine Hauptachse A2 bzw. A3 zu sehen, die durch das jeweilige Zentrum Z2, Z3 läuft. Die Hauptachsen und Zentren sind in Figur 2 eingetragen, obwohl sie eigentlich nicht in der Schnittlinie A-A liegen. Die Eintragung soll das Verständnis der Funktionsweise des Laserstrahldetektors 1 erleichtern.

Figur 2 zeigt weiter, daß die Blendeneinrichtung 9, welche die Blendenöffnungen 5 und 7 bereitstellt, längs der Haupteinfallsachsen im Abstand zu den Detektorgruppen 2 und 3 liegt. Dabei ist in Figur 2 schematisch der Abstand für beide Detektorgruppen gleich. Dies ist jedoch nicht zwingend der Fall, vielmehr kann es vorteilhaft sein, die Höhe der Blende über der jeweiligen Detektorgruppe so zu wählen, daß sie dem Produkt aus halber Breite eines einzelnen Photoempfängers und dem Cotangens des halben gewünschten Winkelmeßbereichs für die Richtung einer Laserstrahlungsquelle entspricht.

Zur Verdeutlichung der Funktion des Laserstrahlungsdetektors 1 ist in Figur 2 schematisch eine Einfallsrichtung 10 für eine zu detektierende, modulierte Laserstrahlung eingetragen. Die Einfallsrichtung 10 führt dazu, daß sich die Schattenkanten der Blendenöffnung 5 über den darunterliegenden Photoempfängern (in Figur 2 sind hier exemplarisch die Photoempfänger 4c, 4d eingezeichnet) verschieben. Der Photoempfänger 4d wird aufgrund der schräg einfallenden Laserstrahlung geringer beleuchtet, der Photoempfänger 4c stärker. Durch die derart bewirkte Verschiebung eines ausgeleuchteten Feldes 11 tritt eine Verstimmung der Photoempfänger 4a-4d auf. Durch Auswertung dieser Verstimmung kann die Einfallsrichtung 10 präzise bestimmt werden.

Dazu werden die Signale der Photoempfänger 4a-4d geeignet ausgewertet. Ein Wert für den Azimutwinkel ergibt sich aus der Differenz der Signalamplitudensummen gegenüberliegender Photoempfänger. Ein Wert für den Elevationswinkel ergibt sich aus der Differenz der Amplitudensummen benachbarter Photoempfänger. Zweckmäßigerweise wird man beide Werte durch die Gesamtsumme der Signalamplituden normieren.

Das anhand der Silizium-Detektorgruppe 2 erläuterte Vorgehen gilt natürlich gleichermaßen auch für die InGaAs-Detektorgruppe 3.

Die Verwendung zweier unterschiedlicher Detektorgruppen 2, 3 hat nicht nur den Vorteil, daß eine größere spektrale Bandbreite erreicht werden kann, es ist auch möglich, eine Aussage über die spektrale Zusammensetzung der detektierten Laserstrahlung zu treffen. Dazu werden die jeweils für sich detektierten Signale der zwei Detektorgruppen zueinander ins Verhältnis gesetzt. Zweckmäßigerweise wird man dazu die Signalamplituden der jeweiligen Detektorgruppen aufsummieren, jedoch sind auch andere Vergleiche möglich. Sind die spektrale Bandbreite und/oder die spektrale Zusammensetzung weniger von Interesse, kann auch nur eine Detektorgruppe 2 oder 3 verwendet werden.

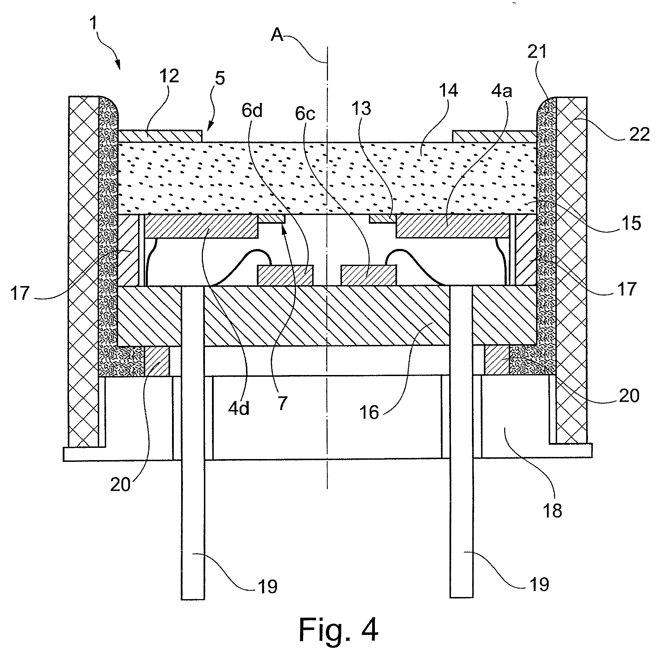

Figur 3 zeigt ein Ausführungsbeispiel für einen Laserstrahldetektor 1. In der Ausführungsform der Figur 3 sind die zwei Detektorgruppen 2, 3 und ihre zugehörigen Blendenöffnungen 5, 7, die in Figur 1 nebeneinander angeordnet waren, konzentrisch um ein gemeinsames Zentrum Z angeordnet. Dies nutzt zum einen vorteilhaft aus, daß die InGaAs-Photoempfänger 6a-d sehr viel kleiner sind, als die Silizium-Photoempfänger 4a-d. Zum anderen erreicht die Bauweise der Figur 3 einen kompakteren Aufbau, der in ein TO-Gehäuse paßt, wie es die Schnittdarstellung der Figur 4 zeigt.

Die Schnittdarstellung läßt weiter erkennen, daß die zwei Detektorgruppen mit den zugehörigen Blendenöffnungen längs der Haupteinfallsrichtung A verschachtelt sind. In Richtung der einfallenden Strahlung liegt zuerst eine Blende 12, die die Blendenöffnung 5 bereitstellt. Daran schließt in Einfallsrichtung die Silizium-Detektorgruppe an, von der in der Schnittdarstellung die Silizium-Photoempfänger 4c, 4d eingezeichnet sind. Die Photoempfänger selbst können dabei bereits als Blende für die nochmals tiefer liegende InGaAs-Detektorgruppe dienen, von der in der Schnittdarstellung der Figur 4 die InGaAs-Photoempfänger 6c, d dargestellt sind. Wie die Draufsicht der Figur 3 zeigt, ist jedoch noch eine zusätzliche Blende 13 erforderlich, um die Blendenöffnung 7 vollständig zu begrenzen.

Im Aufbau der Figur 4 ist die Blende 12 als strukturierte Metallschicht auf der Oberseite eines ersten Glasträgers 14 realisiert. Die vier Photoempfänger 4a-d der Silizium-Detektorgruppe 2 sind auf der Unterseite eines zweiten Glasträgers 15 angebracht. Die Unterseite dieses zweiten Glasträgers 15 ist dabei mit einer strukturierten Metallschicht versehen, welche die zweite Blende 13 realisiert und zugleich über den aktiven Flächen der Photoempfänger 4a-d geöffnet ist. Zudem bildet diese auf dem zweiten Glasträger 15 ausgebildete Blende 13 die zweite Blendenöffnung 7.

Der Einsatz eines hochbrechenden Materials (hier Glas) im Strahlengang wirkt sich, wie bereits erwähnt, vorteilhaft auf die Signallinearität aus.

Der Abstand zwischen erster Blendenöffnung 5 und Silizium-Detektorgruppe 2 (Silizium-Photoempfänger 4a-d) wird über die Dicke der Glasträger 14, 15 eingestellt. Bei der Wahl der Dicke wird ein Brechungseffekt, der an den Glasträgeroberflächen auftritt, berücksichtigt, um einen gewünschten optischen Abstand zu realisieren.

Die InGaAs-Photoempfänger 6a-d sind ihrerseits auf einer Leiterplatte 16 angeordnet, die zudem die elektrischen Kontakte aller Photoempfänger sammelt. Die Leiterplatte 16 ist auf einem TO-Boden 18 befestigt, durch den Signalleitungen 19 nach außen geführt werden. Insgesamt sind neun Signalleitungen vorhanden, um die Signale von den vier Silizium-Photoempfängern 4a-d, den vier InGaAs-Photoempfängern 6a-d sowie eine gemeinsame Rückleitung bereitzustellen.

Der Abstand zwischen den InGaAs-Photoempfängern und der Blendenöffnung 7 ist durch Abstandshalter 17 eingestellt. Weitere Abstandshalter 9 realisieren einen Abstand zwischen der Unterseite der Leiterplatte 16 und dem TO-Boden 18. Der gesamte Aufbau ist mittels eines Vergusses 21 in eine Gehäusewand 22 eingesetzt, die über den TO-Boden 18 gesetzt ist.

Die Funktionsweise des Aufbaus der Figuren 3, 4 entspricht dem der Figuren 1 und 2, mit dem Unterschied, daß es nur eine einzige Haupteinfallsachse A gibt. Etwaige örtliche Fluktuationen der einfallenden Laserstrahlung haben deshalb ggf. geringere Auswirkungen.

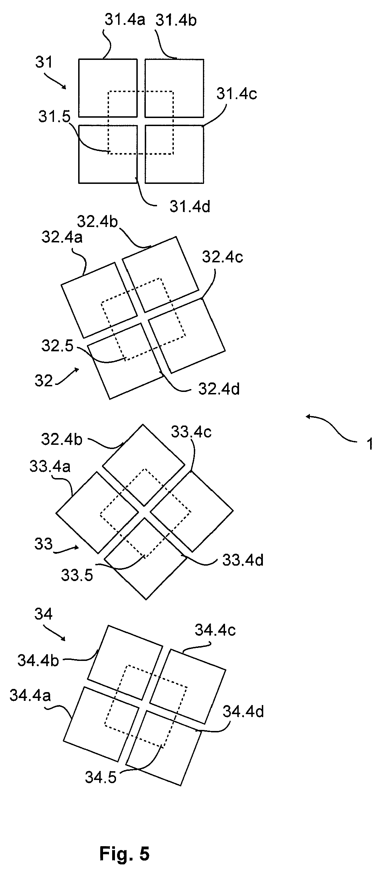

Figur 5 zeigt schematisch eine Draufsicht auf einen Laserstrahldetektor 1 in einer zweiten Ausführungsform, wobei die Draufsicht der der Figur 1 entspricht.

Der Laserstrahlungsdetektor 1 umfaßt mehrere Detektorgruppen 31, 32, 33 und 34. Mindestens eine der Detektorgruppen 31 bis 34 weist den Detektoraufbau gemäß Figur 3 auf.

Jede Detektorgruppe stellt eine Detektoreinrichtung dar und umfaßt also einen Satz von Detektorelementen, die zueinander einen bestimmten Winkelabstand haben. In der Bauweise der Figur 5 beträgt der Winkelabstand 90° und eine Detektorgruppe wird durch einen Satz von vier Einzeldetektoren gebildet.

Der wesentliche Aspekt des Laserstrahlungsdetektors 1 der Figur 5 ist, daß er mehrere Detektorgruppen 31 bis 34 umfaßt, die im Ausführungsbeispiel jeweils vier Detektoren (gekennzeichnet durch die Anfügung .4a bis .4d) aufweisen. Wie bereits anhand der Figur 1 erläutert, hängt die Signalamplitude jedes einzelnen Detektors davon ab, wie stark dieser Detektor mit Strahlung beleuchtet ist. Ist ein Detektor durch die entsprechende Blende .5 stark abgeschattet, fällt die Strahlung vergleichsweise stark aus den Quadranten ein, in dem der Detektor liegt.

Für eine verbesserte Winkelauflösung sind die vier Detektorgruppen 31 bis 34 gegeneinander verdreht. Der Winkelabstand zwischen hinsichtlich der Verdrehung aufeinanderfolgenden Detektorgruppen beträgt dabei 22,5°, da die Detektoren .4a bis .4d jeder Detektorgruppe 31 bis 34 zueinander einen Winkelabstand von 90° haben.

Legt man gedanklich die Detektorgruppen 31 bis 34 über ein gemeinsames Zentrum übereinander, wird die Winkelverschiebung deutlich. Sie bewirkt eine gesteigerte Winkelauflösung.

Natürlich ist die Zahl der Detektoren jeder Detektorgruppe in Figur 5 genauso exemplarisch, wie die Zahl der Detektorgruppen. Eine verbesserte Winkelauflösung kann schon bei der Verwendung von nur drei Detektoren je Detektorgruppe und bei zwei Detektorgruppen erreicht werden. Für eine optimale Winkelauflösung mit einer gegebenen Anzahl von Detektorgruppen ist ein Winkelabstand zwischen hinsichtlich der Verdrehung aufeinanderfolgender Detektorgruppen vorzuziehen, der ein n-tel des Winkelabstandes der Detektoren in der Detektorgruppe entspricht.

Die Auswertung der Signale der Detektorgruppen kann auf verschiedene Art und Weise erfolgen. In einer einfachen Auswertung wird für jede Detektorgruppe 31 bis 34 der Wert für den Azimutwinkel und den Elevationswinkel gemäß der oben genannten Gleichung berechnet. Die derart erhaltenen mehreren Werte für Azimutwinkel und Elevationswinkel können dann einer Mittelung unterworfen werden.

Eine genauere Berechnung erreicht man, wenn die einzelnen Werte für den Azimutwinkel und den Elevationswinkel gewichtet gemittelt werden. Für den Richtungsfaktor kann die Signalsumme, beispielsweise die Amplitudensumme der Detektoren einer jeden Detektorgruppe verwendet werden.

Möchte man den damit verbundenen Rechenaufwand vermeiden, genügt es auch, den oder diejenigen Detektorgruppen für die Mittelung (oder gewichtete Mittelung) auszuwählen, die unter den m höchsten Signalsummen (erhalten aus den Signalen der Detektoren) der n Detektorgruppen liegen. In einem einfachsten Fall wird m gleich 1 gesetzt, d. h. es werden Azimut- und Elevationswinkel desjenigen Laserstrahldetektors ausgewählt, der die höchste Signalsumme hat.

Für die beschriebenen Ausführungsformen kommen Abwandlungen in Betracht, die nachfolgend noch näher erläutert werden.

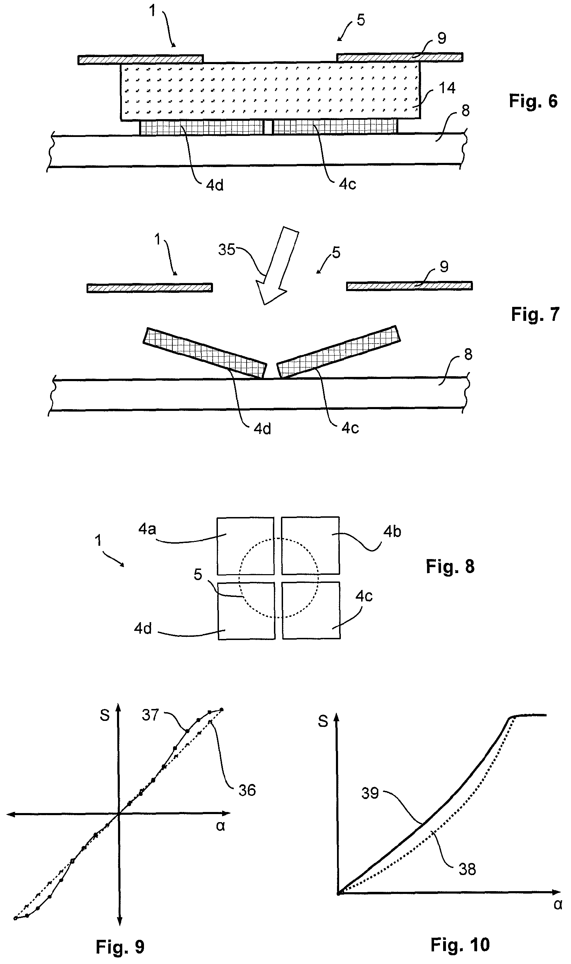

Figur 6 zeigt eine Schnittdarstellung durch einen Laserstrahldetektor 1 gemäß einer ersten Abwandlung, bei dem zwischen den Photoempfängern, die hier als Photoempfänger 4d und 4c eingezeichnet sind, und der Blendeneinrichtung 9 ein Material angeordnet ist, das für die zu detektierende Strahlung transparent ist und einen höheren Brechungsindex als Luft hat. Dieses Material kann beispielsweise, wie anhand der Ausführungsformen der Figuren 3 und 4 bereits beschrieben, eine Glasplatte 14 sein. Durch diese Maßnahme erreicht man den in Figur 8 schematisch dargestellten Vorteil. Figur 8 zeigt das von dem Laserstrahlungsdetektor 1 abgegebene Winkelsignal, beispielsweise das Azimut-Signal, als Funktion des tatsächlichen Winkels α. Die gestrichelt verbundenen Meßpunkte 36 stellen sich ein, wenn die Glasplatte 14, wie in Figur 6 schematisch dargestellt ist, zwischen der Blendenöffnung 5 und den Detektoren liegt. Das Meßsignal ist deutlich linearer, als es ohne die Glasplatte 14 wäre. Die sich dann einstellenden Meßpunkte 37 weichen von dem idealen linearen Verlauf des Sensorsignal deutlich ab.

Eine zweite Abwandlung besteht darin, die Detektorelemente nicht in einer Ebene anzuordnen, sondern jeweils auf die Haupteinfallsrichtung, d. h. auf die Senkrechte zur Blendenöffnung 5 hin zu kippen. Schräg in Richtung des Pfeiles 35 einfallende Strahlung wird damit besser detektiert. Die Verbesserung ist, so zeigte sich, nicht allein durch die Minderung des Kosinus-Effektes begründet, sondern beruht auch darauf, daß der Wirkungsgrad (insbesondere der spektrale Wirkungsgrad) der Photoempfänger mit dem Einfallswinkel der Strahlung abnimmt. Die in Figur 7 schematisch dargestellte Schrägstellung der einzelnen Photoempfänger auf die Senkrechte zur Blendenöffnung hin, beispielsweise in einem Winkel zwischen 2° und 15°, verbessert somit das Signal/Rausch-Verhältnis insbesondere bei schrägen Einfallswinkeln stärker, als man dies vom Kosinus-Effekt erwarten würde. Eine größere Signallinearität und zugleich eine geringere Nachweisgrenze für schräg einfallende Strahlung sind das Ergebnis.

Eine dritte Abwandlung besteht darin, in der Draufsicht quadratische Photoempfänger mit einer runden Blendenöffnung zu kombinieren. Dies ist schematisch in Figur 8 gezeigt, die eine Darstellung ähnlich der Figur 1 ist. Die Blendenöffnung 5 ist nun rund ausgebildet. Die kreisförmige Blende wird vorzugsweise so bemessen, daß sie die gleiche Fläche hat, wie eine quadratische Blende, deren Ecken über den Zentren der Photoempfänger lägen. Auch kann der Rand der Blendenöffnung über der Mitte der Kante jedes rechteckigen Photoempfängers 4a-4d liegen. Andere Abmessungen sind natürlich möglich.

Die Wirkung dieser runden Blende ist in Figur 10 zu sehen, die wiederum das Sensorsignal über den tatsächlichen Winkel α zeigt, hier jedoch nur für positive Eintreffwinkel. Die Kurve 38 erhält man bei einer kreisförmigen Blende. Bei Winkeln oberhalb von 60° knickt die Kurve flach ab, was das Ende des Meßbereiches signalisiert. Bei kreisförmiger Blende erhält man die Kurve 39, die deutlich dem linearen Verlauf näher kommt. Die Flächen der Blenden sind gleich groß.

## Patentansprüche

1. Vorrichtung zum Lokalisieren von modulierten, optischen Strahlungsquellen, die eine Blendeneinrichtung (9; 12, 13), welche eine Blendenöffnung (5, 7) hat, und eine Detektoreinrichtung (2, 3) umfaßt, die bezogen auf längs einer Haupteinfallsachse einfallende Strahlung hinter der Blendenöffnung (5, 7) liegt, wobei die Detektoreinrichtung (2, 3) mindestens drei Detektorelemente (4a-d; 6a-d) aufweist, die um ein Zentrum (Z2, Z3; Z) herum angeordnet sind, und die Blendenöffnung (5, 7) der Blendeneinrichtung aufweist, die mittig über dem Zentrum (Z1, Z2; Z) und längst der Haupteinfallsachse (A2, A3; A) vom Zentrum (Z2, Z3; Z) beabstandet angeordnet ist und alle Detektorelemente (4a-d; 6a-d) in Sicht längs der Haupteinfallsachse (A2, A3; A) nur teilweise überdeckt, **dadurch gekennzeichnet, daß** längs der einzigen Haupteinfallsachse der Strahlung eine erste Blendenöffnung (5), ein erster Satz von mindestens drei um ein Zentrum herum angeordneten Detektorelemente (4a-d), eine zweite Blendenöffnung (7) und ein zweiter Satz von mindestens drei um ein Zentrum herum angeordneten Detektorelementen (6a-d) aufgereiht sind, wobei in einer Projektion längs der Haupteinfallsachse (A) die Blendenöffnungen (5, 7) und Sätze von Detektorelementen (4a-d; 6a-d) konzentrisch angeordnet sind und die erste Blendenöffnung (5) und der erster Satz (4a-d) in der Projektion längs der Haupteinfallsachse (A) die zweite Blendenöffnung (7) und den zweiten Satz (6a-d) außen umgeben und wobei die Detektorelemente der zwei Sätze unterschiedliche spektrale Empfindlichkeit aufweisen.

2. Vorrichtung nach Anspruch 1, **dadurch gekennzeichnet, daß** die Blendenöffnung (5, 7) quadratisch ist und daß die Ecken der Blendenöffnung (5, 7) über den Zentren der jeweils darunterliegenden Detektorelementen (4a-d; 6a-d) liegen.

3. Vorrichtung nach einem der obigen Ansprüche, **dadurch gekennzeichnet, daß** zwischen der Blendenöffnung (5, 7) und der Detektoreinrichtung (2, 3) ein für optische Strahlung transparentes und gegenüber Luft höher brechendes Material angeordnet ist, insbesondere eine Glasplatte (14, 15).

4. Vorrichtung nach einem der obigen Ansprüche. **dadurch gekennzeichnet, daß** jedes Detektorelement (4a-d, 6a-d) zur Haupteinfallsachse (A2, A3; A) hin gekippt ist, vorzugsweise um einen Winkel von 2° bis 15°gegenüber der Senkrechten zur Haupteinfallsachse (A2, A3; A).

5. Vorrichtung nach einem der obigen Ansprüche, **dadurch gekennzeichnet, daß** die Detektoreinrichtung (2, 3) vier um ein Zentrum gruppierte Detektorelemente (4a-d; 6a-d) aufweist und daß die Blendenöffnung (5, 7) der Blendeneinrichtung (9; 12, 13) kreisförmig ist, wobei vorzugsweise die Zentren der Detektorelemente (4a-d; 6a-d) unter dem Rand der Blendenöffnung (5, 7) liegen.

6. Vorrichtung nach Anspruch 1, **dadurch gekennzeichnet, daß** die Detektorelemente des einen der Sätze (4a-d) Silizium-Photoempfänger und die Detektorelemente des anderen der Sätze (6a-d) Indium-Gallium-Arsenid-Photoempfänger sind.

7. Vorrichtung nach einem der obigen Ansprüche, **dadurch gekennzeichnet, daß** die Detektoreinrichtung zwei Sätze (2, 3) von jeweils mindestens drei um ein Zentrum herum angeordneten Detektorelemente (4a-d; 6a-d) aufweist, und daß die Blendeneinrichtung (9) pro Satz von mindestens drei um ein Zentrum herum angeordneten Detektorelementen (4a-d; 6a-d) eine Blendenöffnungen (5, 7) umfaßt, wobei die Sätze von Detektorelementen gegeneinander um einen Drehwinkel verdreht sind und der Drehwinkel geringer ist als ein Winkelabstand zwischen zwei hinsichtlich der Verdrehung benachbarten Detektorelementen und besonders vorzugsweise bei n in verschiedenen Drehlagen vorgesehenen Sätzen der Drehwinkel ein n-tel des Winkelabstandes beträgt.

8. Vorrichtung nach einem der obigen Ansprüche, **gekennzeichnet durch** eine Ausführung mit vier Detektorelementen und eine Auswerteeinrichtung, die mit den vier Detektorelementen verbunden ist und die ein Wert für einen ersten Winkel einfallender Strahlung gemäß der Gleichung A = (Sa+Sd-Sb-Sc)/(Sa+Sb+Sc+Sd) und ein Wert für einen zweiten Winkel einfallender Strahlung gemäß der Gleichung E = (Sa+Sc-Sb-Sd)/(Sa+Sb+Sc+Sd) berechnet, wobei Sa-Sd die Signalamplituden der vier Detektorelemente (4a bis 4d bzw. 6a bis 6d) sind.

9. Verfahren zum Lokalisieren von modulierten, optischen Strahlungsquellen, **dadurch gekennzeichnet, daß** eine Vorrichtung nach einem der Ansprüche 1 bis 7 in einer Ausführung mit vier Detektorelementen verwendet wird und ein Wert für einen ersten Winkel einfallender Strahlung gemäß der Gleichung A = (Sa+Sd-Sb-Sc)/(Sa+Sb+Sc+Sd) und ein Wert für einen zweiten Winkel einfallender Strahlung gemäß der Gleichung E = (Sa+Sc-Sb-Sd)/(Sa+Sb+Sc+Sd) berechnet, wobei Sa-Sd die Signalamplituden der vier Detektorelemente sind.

10. Verfahren nach Anspruch 9, **dadurch gekennzeichnet, daß** eine Vorrichtung nach einem der Ansprüche 3 bis 5 verwendet wird, wobei durch Verhältnisbildung von Signalen von Photoempfängern unterschiedlicher spektraler Empfindlichkeit ein die Wellenlänge der detektierten Strahlung anzeigendes Signal erzeugt wird.

11. Verfahren nach einem der Ansprüche 9 oder 10, **dadurch gekennzeichnet, daß** eine Vorrichtung nach Anspruch 7 verwendet wird und für jeden Satz die Werte für ersten und zweiten Winkel getrennt berechnet und dann gemittelt werden, wobei vor der Mittelung vorzugsweise eine Selektion oder Wichtung anhand der summierten Signale jedes Satzes erfolgt.

## Claims

1. A device for locating modulated optical radiation sources which device comprises an aperture unit (9; 12, 13) having an aperture opening (5, 7) and comprises a detector unit (2, 3) which, relative to incident radiation along a main axis of incidence, lies behind the aperture opening (5, 7), wherein the detector unit (2, 3) comprises at least three detector elements (4a-d; 6a-d) which are arranged around a centre (Z2, Z3; Z) and the aperture opening (5, 7) of the aperture unit is arranged centrally above the centre (Z1, Z2; Z) and spaced apart from the centre (Z2, Z3; Z) along the main axis of incidence (A2, A3; A) and only partially covers all detector elements (4a-d; 6a-d) when viewed along the main axis of incidence (A2, A3; A), **characterized in that** a first aperture opening (5), a first set of at least three detector elements (4a-d) arranged around a centre, a second aperture opening (7) and a second set of at least three detector elements (6a-d) arranged around a centre are all lined up along one single main axis of incidence of radiation, wherein the aperture openings (5, 7) and sets of detector elements (4a-d; 6a-d) are arranged concentrically in a projection along the main axis of incidence (A) and wherein the first aperture opening (5) and the first set (4a-d) externally surround the second aperture opening (7) and the second set (6a-d) in the projection along the main axis of incidence (A) and wherein the detector elements of the two sets have different spectral sensitivity.

2. The device according to claim 1, **characterized in that** the aperture opening (5, 7) is square and **in that** each corner of the aperture opening (5, 7) lies above one of the centres of the detector elements (4a-d; 6a-d) below.

3. The device according to one of the above claims, **characterized in that** a material, transparent for optical radiation and more refractive than air, in particular a glass sheet (14, 15), is arranged between the aperture opening (5, 7) and the detector unit (2, 3).

4. The device according to one of the above claims, **characterized in that** each detector element (4a-d, 6a-d) is tilted toward the main axis of incidence (A2, A3; A), preferably at an angle of 2° to 15° against the perpendicular relative to the main axis of incidence (A2, A3; A).

5. The device according to one of the above claims, **characterized in that** the detector unit (2, 3) has four detector elements (4a-d; 6a-d) grouped around a centre and **in that** the aperture opening (5, 7) of the aperture unit (9; 12, 13) is circular, wherein preferably the centres of the detector elements (4a-d; 6a-d) lie below the edge of the aperture opening (5, 7).

6. The device according to claim 1, **characterized in that** the detector elements of the one set (4a-d) are silicon photoreceivers and the detector elements of the other set (6a-d) are indium-gallium-arsenide photoreceivers.

7. The device according to one of the above claims, **characterized in that** the detector unit has two sets (2, 3) each comprising at least three detector elements (4a-d; 6a-d) arranged around a centre, and **in that** the aperture unit (9) comprises one aperture opening (5, 7) per set of at least three detector elements (4a-d; 6a-d) arranged around a centre, wherein the sets of detector elements are rotated against each other by an angle of rotation and the angle of rotation is smaller than an angular separation between two detector elements which are next to each other with regard to rotation, and wherein preferably, the angle of rotation is an n-th of the angular separation, when n sets are provided in different rotation positions.

8. The device according to one of the above claims, **characterized by** four detector elements and an evaluation unit which is connected to the four detector elements and which calculates a value for a first angle of incident radiation according to the equation A = (Sa+Sd-Sb-Sc)/(Sa+Sb+Sc+Sc) and a value for a second angle of incident radiation according to the equation E = (Sa+Sc-Sb-Sd)/(Sa+Sb+Sc+Sd), wherein Sa to Sd are the signal amplitues of the four detector elements (4a to 4d and 6a to 6d, respectively).

9. A method for locating modulated optical radiation sources, **characterized in that** a device according to one of the claims 1 to 7 is used in an embodiment with four detector elements and that a value for a first angle of incident radiation is calculated according to the equation A = (Sa+Sd-Sb-Sc)/Sa+Sb+Sc+Sd) and a value for a second angle of incident radiation is calculated according to the equation E = (Sa+Sc-Sb-Sd)/(Sa+Sb+Sc+Sd), wherein Sa-Sd are the signal amplitudes of the four detector elements.

10. The method according to claim 9, **characterized in that** a device according to one of claims 3 to 5 is used, wherein a signal representing the wavelength of the detected radiation is produced by establishing a relationship between signals from photoreceivers of different spectral sensitivity.

11. The method according to one of claims 9 or 10, **characterized in that** a device according to claim 7 is used and the values for first and second angles are calculated separately for each set and then averaged wherein, preferably before averaging, a selection or weighting is effected on basis of totalled signals of each set.

## Revendications

1. Ensemble de localisation de sources de rayonnement optique modulé, qui comporte un dispositif d'écran (9; 12, 13) qui possède une ouverture d'écran (5, 7) et un dispositif de détection (2, 3) situé en aval de l'ouverture d'écran (5, 7) dans le sens de propagation du rayonnement incident suivant un axe principal d'incidence,
le dispositif de détection (2, 3) présentant au moins trois éléments de détecteur (4a-d; 6a-d) disposés autour d'un centre (Z2, Z3; Z) et l'ouverture d'écran (5, 7) du dispositif d'écran, disposée centralement au-dessus du centre (Z1, Z2; Z) et à distance du centre (Z2, Z3; Z) le long de l'axe principal d'incidence (A2, A3; A) et ne recouvrant que partiellement tous les éléments de détecteur (4a-d; 6a-d) dans une vue le long de l'axe principal d'incidence (A2, A3; A),
**caractérisé en ce que**
une première ouverture d'écran (5), un premier jeu d'au moins trois éléments de détecteur (4a-d) disposés autour d'un centre, une deuxième ouverture d'écran (7) et un deuxième jeu d'au moins trois éléments de détecteur (6a-d) disposés autour d'un centre étant rangés le long de l'unique axe principal d'incidence du rayonnement,
**en ce que** dans une projection le long de l'axe principal d'incidence (A), les ouvertures d'écran (5, 7) et les jeux d'éléments de détecteur (4a-d; 6a-d) sont disposés concentriquement et la première ouverture d'écran (5) et le premier jeu (4a-d) entourent par l'extérieur la deuxième ouverture d'écran (7) et le deuxième jeu (6a-d) dans la projection le long de l'axe principal d'incidence (A), les éléments de détecteur des deux jeux présentant des sensibilités spectrales différentes.

2. Ensemble selon la revendication 1, **caractérisé en ce que** l'ouverture d'écran (5, 7) est carrée et **en ce que** les sommets de l'ouverture d'écran (5, 7) sont situés au-dessus des centres des éléments de détecteur (4a-d; 6a-d) situés en dessous d'eux.

3. Ensemble selon l'une des revendications précédentes, **caractérisé en ce qu'**entre l'ouverture d'écran (5, 7) et le dispositif de détecteur (2, 3) est disposé un matériau transparent pour le rayonnement optique et dont l'indice de réfraction est supérieur à celui de l'air, en particulier une plaque de verre (14, 15).

4. Ensemble selon l'une des revendications précédentes, **caractérisé en ce que** chaque élément de détecteur (4a-d, 6a-d) est incliné par rapport à l'axe principal d'incidence (A2, A3; A), de préférence d'un angle de 2° à 15° par rapport à la perpendiculaire à l'axe principal d'incidence (A2, A3; A).

5. Ensemble selon l'une des revendications précédentes, **caractérisé en ce que** le dispositif de détecteur (2, 3) présente quatre éléments de détecteur (4a-d; 6a-d) groupés autour d'un centre et **en ce que** l'ouverture d'écran (5, 7) du dispositif d'écran (9; 12, 13) est de forme circulaire, les centres des éléments de détecteur (4a-d; 6a-d) étant de préférence situés en dessous du bord de l'ouverture d'écran (5, 7).

6. Ensemble selon la revendication 1, **caractérisé en ce que** les éléments de détecteur de l'un des jeux (4a-d) sont des photorécepteurs au silicium et les éléments de détecteur de l'autre des jeux (6a-d) sont des photorécepteurs à l'arsenure d'indium et de gallium.

7. Ensemble selon l'une des revendications précédentes, **caractérisé en ce que** le dispositif de détecteur présente deux jeux (2, 3) constitués chacun d'au moins trois éléments de détecteur (4a-d; 6a-d) disposés autour d'un centre et **en ce que** le dispositif d'écran (9) comporte pour chaque jeu d'au moins trois éléments de détecteur (4a-d; 6a-d) disposés autour d'un centre une ouverture d'écran (5, 7), les jeux d'éléments de détecteur étant tournés les uns par rapport aux autres d'un angle de rotation et l'angle de rotation étant inférieur à la distance angulaire entre deux éléments de détecteur voisins dans le sens de la rotation et de façon particulièrement préférable, l'angle de rotation représente un nième de l'écart angulaire lorsque n jeux sont prévus en différentes positions de rotation.

8. Ensemble selon l'une des revendications précédentes, **caractérisé par** un mode de réalisation avec quatre éléments de détecteur et un dispositif d'évaluation raccordé aux quatre éléments de détecteur et calculant une valeur d'un premier angle de rayonnement incident par l'équation A = (Sa+Sd-Sb-Sc)/(Sa+Sb+Sc+Sd) et une valeur d'un deuxième angle de rayonnement incident par l'équation E = (Sa+Sc-Sb-Sd)/(Sa+Sb+Sc+Sd), Sa-Sd étant les amplitudes des signaux des quatre éléments de détecteur (4a à 4d ou 6a à 6d).

9. Procédé de localisation de sources de rayonnement optique modulé, **caractérisé en ce qu'**il utilise un ensemble selon l'une des revendications 1 à 7 dans un mode de réalisation à quatre éléments de détecteur et calcule une valeur d'un premier angle de rayonnement incident par l'équation A = (Sa+Sd-Sb-Sc)/(Sa+Sb+Sc+Sd) et une valeur d'un deuxième angle de rayonnement incident par l'équation E = (Sa+Sc-Sb-Sd)/(Sa+Sb+Sc+Sd), Sa-Sd étant les amplitudes des signaux des quatre éléments de détecteur.

10. Procédé selon la revendication 9, **caractérisé en ce qu'**il utilise un ensemble selon l'une des revendications 3 à 5, et dans lequel par formation du rapport entre des signaux de photorécepteurs de différentes sensibilités spectrales, un signal qui indique la longueur d'onde du rayonnement détecté est formé.

11. Procédé selon l'une des revendications 9 ou 10, **caractérisé en ce qu'**il utilise un ensemble selon la revendication 7 et **en ce que** pour chaque jeu, les valeurs du premier et du deuxième angle sont calculées séparément et leur moyenne est ensuite formée, une sélection ou une pondération ayant lieu à l'aide des sommes des signaux de chaque jeu de préférence avant le calcul de la moyenne.
